# EUROPEAN PATENT APPLICATION

(11) **EP 4 834 852 A1**
(43) Date of publication of application: **04.11.2026**
(21) Application number: 24847365.4
(22) Date of filing: 17.12.2024
(51) Int. Cl.: C02F 1/467, E04H 4/12, C02F 103/42

(54) **PORTABLE SALT CHLORINATOR**

(30) Priority: 27.12.2023 AR P230103558
(71) Applicant: Annoni, Andrés Ezequiel, 28223 Pozuelo de Alarcón (Madrid) (ES)
(72) Inventor: Annoni, Andrés Ezequiel, 28223 Pozuelo de Alarcón (Madrid) (ES)
(74) Representative: Manresa Medina, José Manuel
(86) International application number: PCT/IB2024/062766
(87) International publication number: WO 2025/141393

(57) **Abstract**

A portable saline chlorinator that can be installed in any pool, pond or similar in a practical, quick and easy way by immersing a saline chlorination module in the pool and fixing a control module anywhere outside the pool. The chlorinator of the invention determines the exact amount of kilograms of salt needed based on the characteristics of each pool, thus avoiding future inconveniences.

## Description

### Field of the invention

The present invention relates to the field of devices, means or arrangements used for the sanitization and maintenance of water in swimming pools, ponds and the like, and more particularly refers to a portable saline chlorinator for the saline chlorination of pool water, which allows the necessary daily production of natural chlorine according to the characteristics of each pool. Even though the present description refers to a saline chlorinator for swimming pools, it must be made clear that thanks to its portable structural configuration, the chlorinator of the invention can be used in any type of container, vessel, pool, pond or similar in which the conditions of the stored water must be maintained.

### Description of prior art

As is known in the field of art, salt chlorination is a method for producing natural chlorine and treating pool water. It is an electronic system that through an electrolysis process, dissociates salt molecules (sodium chloride) and releases natural chlorine into the pool water. For this to happen, a minimum amount of common salt must be dissolved in the water and the natural chlorine generated has the same disinfecting power as industrial chlorine. This process generates sodium (Na) and chlorine gas (Cl2). Chlorine gas reacts with water to form hypochlorous acid (HClO), resulting in residual free chlorine that will disinfect the pool due to its biocidal power.

Among the advantages of salt chlorination is that instead of adding chlorine directly to the water, it is generated on site, which eliminates the need to store and handle hazardous chemicals. Additionally, salt chlorination does not introduce additional impurities to the water, is usually less irritating to the skin and eyes compared to traditional chlorine and tends to reduce the chlorine odor and taste in the water compared to conventional chlorination methods.

Generally, to carry out chlorination, a saline chlorinator is used, which is installed in a portion of the water circulation circuit of the pool to receive water from the pool and inject water with hypochlorous acid into the pool and allow the disinfection - sterilization of the water. For this purpose, the chlorinator is electrically powered and is made up of electrodes and an electrolytic cell through which electrolysis is carried out as mentioned above.

However, current chlorinators must be installed in a portion of the pool's water circulation path, with the inconveniences that this entails. As it is a fixed installation, the installation must be adapted to be able to mount the chlorinator. To do this, pipes or tubes must be cut, equipment or other components must be moved to allow the chlorinator to be installed, as well as its electrical installation. This cannot always be carried out optimally due to site limitations and it also takes time, as it must be carried out by a professional to avoid future problems.

Likewise, to carry out saline chlorination, it is recommended to pour 5g of salt per liter of water. This is a rough estimate that can be taken for any pool. However, since this is an estimate, it is not specifically adapted to each pool, since the user will make approximate calculations and based on this, will pour the necessary amount of salt with the risks that this could cause since high levels of salt would harm people's health.

Given the current state of the art in relation to maintenance tasks for swimming pools, ponds or similar, it would be very convenient to have a new arrangement, device or means that allows saline chlorination of swimming pools whose installation is more practical and easier, and that can also determine the exact amount of salt to add depending on the characteristics of each pool.

### BRIEF DESCRIPTION OF THE INVENTION

It is therefore an object of the present invention to provide a new portable type saline chlorinator, which can be installed in any pool, pond or similar in a much more practical, quick and easy way.

Another object of the present invention is to provide a portable saline chlorinator that does not require specialized labor for its installation since anyone can carry it out.

It is still another object of the present invention to provide a portable saline chlorinator that allows the user to be informed of the necessary amount of salt to add depending on the characteristics of each pool.

It is yet another object of the present invention to provide a portable salt chlorinator that indicates whether the amount of salt added is correct.

It is also another object of the present invention to provide a portable saline chlorinator for the sanitization and maintenance of water contained in swimming pools, ponds and the like, which comprises: at least one removable control module provided internally with an electronic module that has at least one voltage regulator and at least one processing unit; and at least one mobile saline chlorination module submersible in a liquid medium and operatively connected to said removable control module, said mobile saline chlorination module being provided with an electrolytic cell.

### BRIEF DESCRIPTION OF THE DRAWINGS

For greater clarity and understanding of the object of the present invention, it has been illustrated in several figures, in which the invention has been represented in one of the preferred embodiments, all by way of example, where:
Figure 1 shows a perspective view of the portable salt chlorinator according to the present invention;
Figure 2 shows a side view of the portable chlorinator of the invention;
Figure 3 shows an exploded view of the chlorinator according to the present invention;
Figure 4 shows a front view of a front housing of a command module according to the present invention;
Figure 5 shows a front view of a rear housing of a command module according to the present invention;
Figure 6 shows an exploded view of a salt chlorination module according to the present invention;
Figure 7 shows a side view of an electrolytic cell arranged within said salt chlorination module and in accordance with the present invention;
Figure 8 shows a schematic and perspective view of the electrolytic cell of the invention and its electrical connection with a power cable;
Figure 9 shows a block diagram of an electronics module according to the present invention;
Figure 10 shows an electrical connection scheme between an external power supply and the chlorinator of the present invention; and
Figure 11 shows a schematic view of the portable saline chlorinator of the invention installed in a pool according to the present invention.

### DETAILED DESCRIPTION OF THE INVENTION

Referring now to the figures, it can be seen that the invention consists of a new portable saline chlorinator that can be installed in any pool, pond or similar in a practical, quick and easy manner by immersing a saline chlorination module in the pool and fixing a control module to any part outside the pool. The chlorinator of the invention determines the exact amount of kilograms of salt needed based on the characteristics of each pool, thus avoiding future inconveniences.

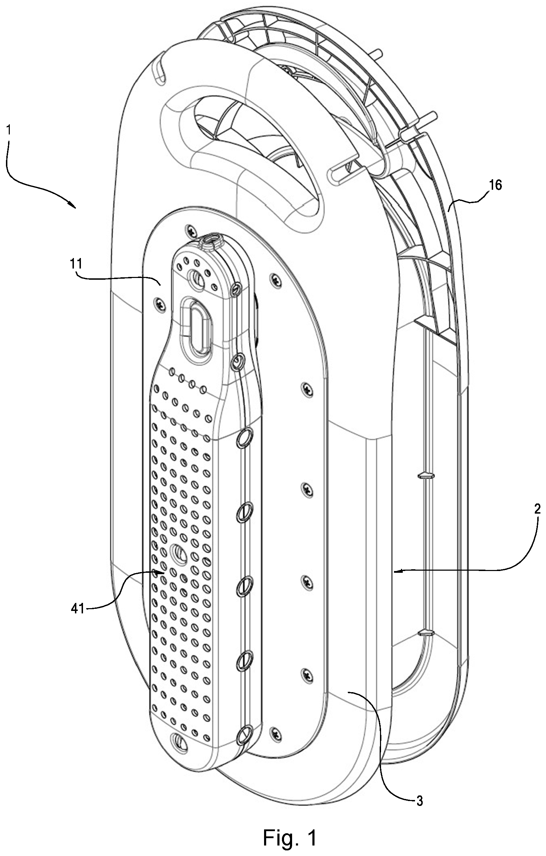

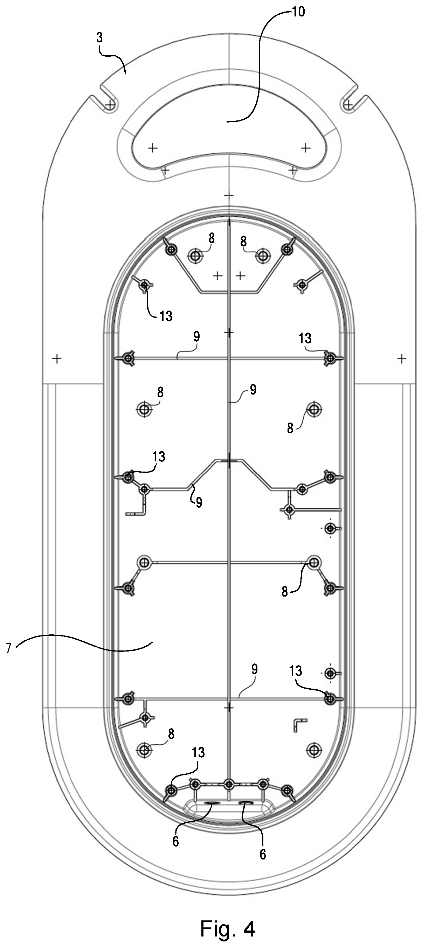

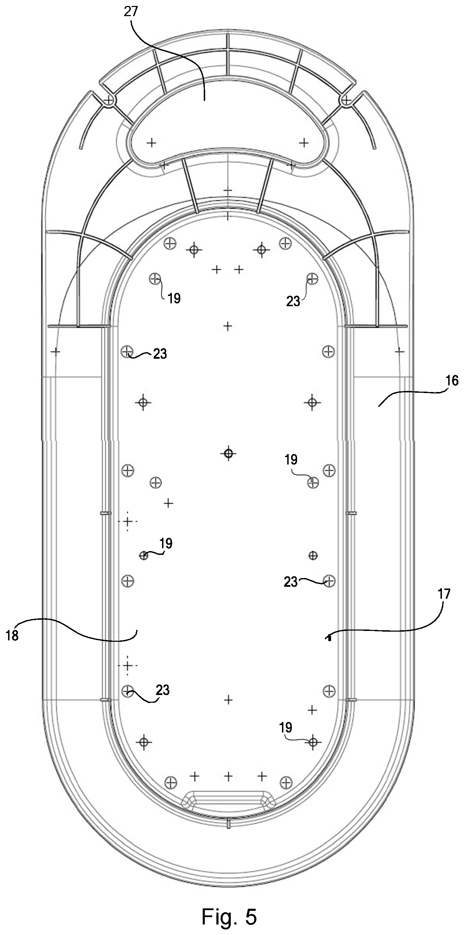

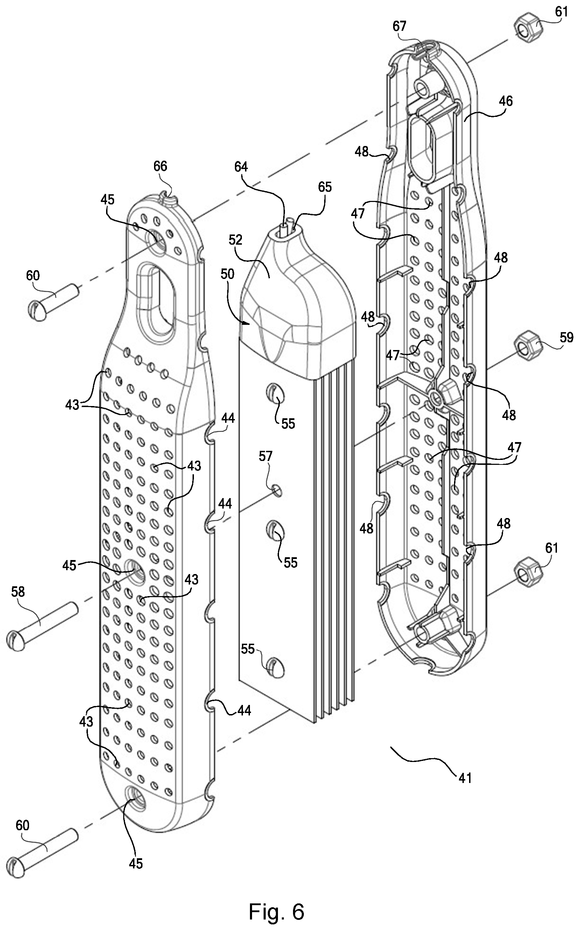

Thus, and in accordance with figures 1 to 11, the portable saline chlorinator of the present invention is indicated by the general reference 1 and comprises at least one removable control module 2 that will be installed on a wall or part outside the pool but close to it. It should be understood that the term "pool" is used as a synonym for swimming pool, pond, or similar. Said removable command module 2 comprises a front command module casing 3 having an internal front casing housing 4 within which an electronics module 5 is mounted, said internal front casing housing 4 further having a pair of lower through holes 6 for the passage of cables, and a front housing base 7 provided with a plurality of front housing perimeter holes 8 and housing reinforcement ribs 9. Furthermore, said front casing of the command module 3 has an opening or window 10 at the top.

In order to close the internal housing of the front casing 4, a front casing cover 11 is provided which has a plurality of front cover fixing holes 12 that are aligned with a plurality of front housing fixing holes 13 provided in said internal housing of the front casing 4 and through which respective fixing means 14 such as screws with nuts, etc. pass. Likewise, said front casing cover 11 has an LED cover plug 15 provided in an upper part thereof but not limiting for the invention. The LED cap 15 can be removable or fixed and through an LED it will indicate the operating status of the chlorinator of the invention.

On the other hand, the detachable command module 2 also includes a rear command module housing 16 featuring a protruding rear housing internal housing 17 beyond the thickness of said command module rear housing 16, said rear housing internal housing 17 presents a rear housing base 18 provided with a plurality of rear housing perimeter holes 19 which are aligned with said plurality of front housing perimeter holes 8 and through which respective fixing means pass 20 which may be, but are not limited to, screws with nuts, etc., in order to carry out the assembly and coupling of the front 3 and rear 16 command module housings.

It is also provided with a rear housing cover 21 of said internal rear housing 18 which has a plurality of rear cover fixing holes 22 which are aligned with a plurality of rear housing fixing holes 23 provided in said rear housing base 18 and through which respective fixing means 24 pass, which may be, but are not limited to, respective screws together with nuts. On the other hand, and in order to allow the mounting of the removable command module 2 on a wall or part outside the pool, a command module fixing support 25 is provided mounted on a portion of said rear casing of the command module 16 and fixed through respective fixing means 26. It is highlighted that, and like the front casing of the command module 3, said rear command module casing 16 has an opening or window 27 which together will facilitate the handling of the removable command module 2.

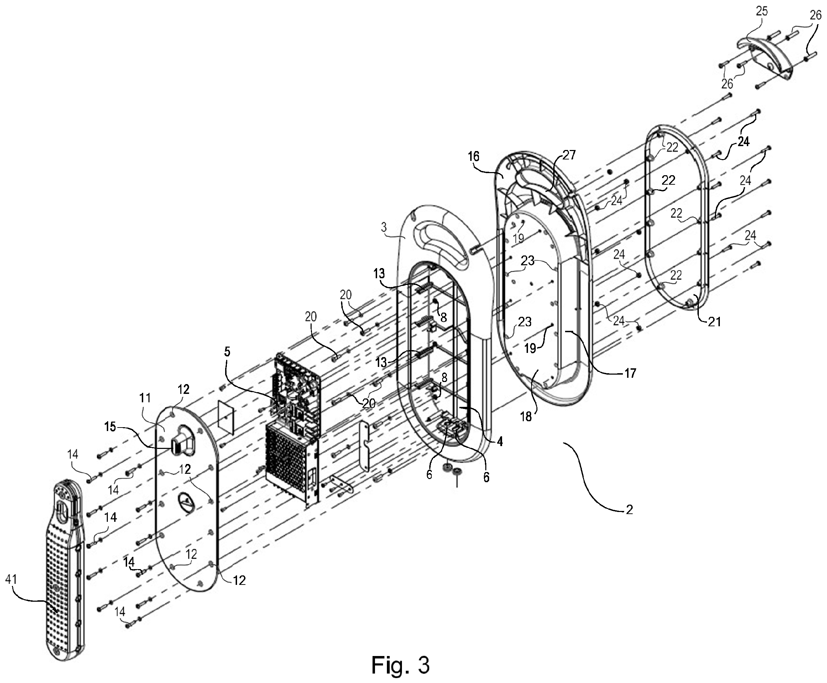

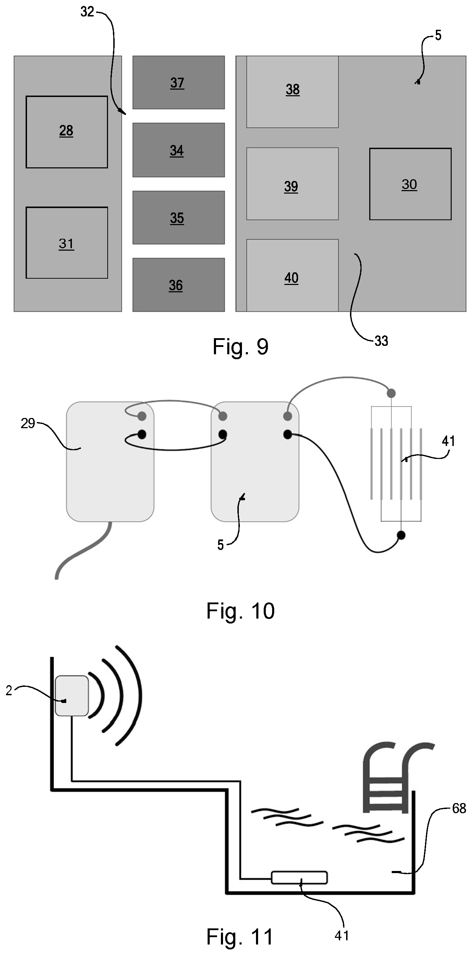

For its part, and in accordance with figures 3 and 9, said electronic module 5 will allow the transformation of alternating power from the network into direct power, and is mounted in said internal housing of the front casing 4 through respective fixing elements such as screws, but not limited to. Said electronic module is basically an electronic board that has a power input 28 operatively connected to an external power supply 29, a power output 30, a voltage regulator 31 connected to said power input 28 and power output 30, a processing unit 32 and a detection unit 33.

Wherein, said processing unit 32 comprises a processor 34, a non-volatile memory 35, a user interface module 36 and a communication module via Bluetooth and Wi-Fi 37, all of which are communicated with said processor 34 which commands the actions to be performed based on the information it receives from the detection unit 33. Whereas, said detection unit 33 comprises a set of MOSFET or PWM "Chlorator" transistors 38, an output current sensor 39 connected to said power output 30 of the electronics module 5, and a polarity inverter unit 40 connected to said input 28 and power output 30 of the electronics module 5.

It is highlighted that said feed inlet 28, feed outlet 30, processing unit 32 and detection unit 33 are operatively communicated and connected to each other in order to constantly send and receive information to adapt the saline chlorination conditions necessary for each type of pool. In turn, said voltage regulator 31 allows the input voltage to be adjusted to a constant value since there may be small deviations due to variations in the electrical network, variations inherent to the power supply, etc. This stage ensures a precise reference and the stability of the electrical signals within the electronic module 5 as well as the correct operation of its electronic components. For its part, said communication module 37 allows communications to and from the electronic board within the industry protocols and standards. It has the ability to establish links via Bluetooth to mobile devices through the operation of a proprietary application. It also allows communication via WIFI through an internet link to an online platform (server) set up by the product manufacturer.

Likewise, said processor 34 evaluates, makes decisions and is responsible for directing communications and recording system data in the non-volatile memory 35 of the assembly. Where, said non-volatile memory is the system storage bank. It stores and updates parameters provided by the different components of the computer. Records are taken of different values such as timers, on-off times, current measurements, etc. Some of them will directly influence the internal behavior of the system and others will be reported to the user through the communications module. On the other hand, said set of MOSFET 38 transistors or PWM "Chlorator" are responsible for varying the pulse width modulation and adjusting the effective output voltage delivered to the electrolytic cell. In addition, the output current sensor 39 measures the current being delivered to the electrolytic cell (which will be described below) in real time. Whereas, said polarity inverter unit 40 may be, but is not limited to, a set of inverter relays arranged in such a way that their switching allows reversing the polarity of the output voltage to the electrolytic cell.

In relation to the user interface 36, the same is connected to said LED cover cap 15 which comprises an RGB LED 15 that indicates, according to a color code provided together with a user manual, the simplified status of the system's operation. As an example, but not limited to, in relation to the amount of salt present in the water, if the RGB 15 LED lights up yellow and is flashing, it implies that the amount of salt is very low. If it is yellow and fixed, the amount of salt is still low, while if the RGB 15 LED is green and fixed, the amount of salt is correct. In cases of quantities above the appropriate ones, the RGB 15 LED may light up in an orange color. If it is fixed, it indicates a high amount of salt, while if it flashes, it indicates a very high amount of salt. Regarding the operation and status of the chlorinator itself, if the RGB 15 LED lights up blue and is fixed, the Bluetooth connection module is active. If the RGB 15 LED lights up violet and is steady, the pool is ready for use. If the RGB LED 15 is green and blinking, it means that the chlorinator is in standby mode. Whereas, if the RGB 15 LED is red and flickering, it implies overheating. Finally, if the RGB 15 LED is blinking and white, it implies a system update. As mentioned above, the colors and functions of the RGB 15 LED are merely illustrative and can be modified without any problem.

On the other hand, and to carry out saline chlorination according to the present invention, at least one mobile saline chlorination module 41 is provided which is submerged in the bottom of the pool and is operatively connected to said power supply output 30 of the electronics module 5 in order to receive regulated current and carry out the electrolysis process. For this purpose, the chlorination module 41 has a front chlorination module housing 42 which is provided with a plurality of front housing holes 43, a plurality of front housing side slots 44, and a plurality of front housing fixing holes 45. Likewise, a rear chlorination module casing 46 is provided which is provided with a plurality of rear casing holes 47, a plurality of rear casing side slots 48 which coincide in alignment with said plurality of front casing side slots 44 so as to jointly form lateral openings for the passage of water when both casings 42 and 46 are coupled. Also, said rear housing of the chlorination module 46 It has a plurality of rear casing fixing holes 49 which are aligned with said plurality of front casing fixing holes 45. It is highlighted that said plurality of front casing holes 43 and said plurality of rear casing holes 47 will allow the passage of water through an electrolytic cell 50 through which the saline electrolysis process is carried out. Said electrolytic cell 50 is located within said front 42 and rear 46 housings and comprises a plurality of resin-coated electrodes 51 that are retained superiorly by means of an upper cell housing 52. Wherein, each electrode 51 can be made of any similar metallic material (titanium, ruthenium, among others, but not limiting for the invention) and has a plurality of electrode holes 53 which are aligned between electrodes 51 to carry out the connection between them by means of a set of rubber washers 54, screws 55 and nuts 56. Likewise, each electrode 51 will have an electrode fixing hole 57 that coincides with a pair of front 45 and rear 49 housing fixing holes aligned with each other, through which a fixing means such as a screw 58 will pass and secured by nut 59 in order to mount the electrolytic cell 50 between said front 42 and rear 46 casings. It is highlighted that said front 42 and rear 46 casings are coupled together by respective fixing means 60 - 61 which may be, but are not limited to, screws - nuts, respectively.

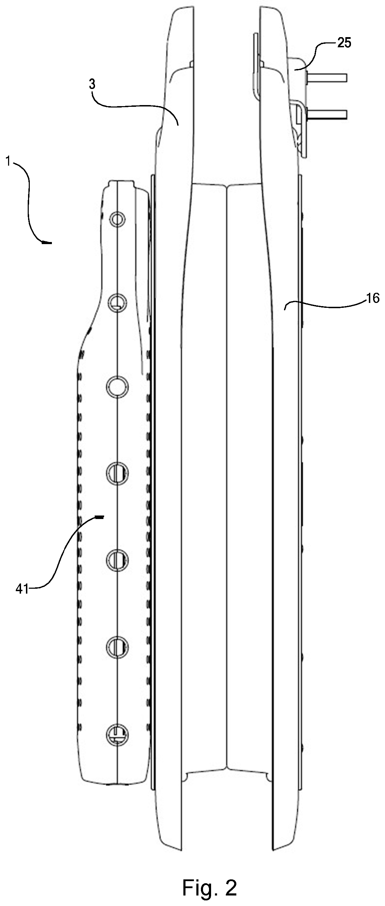

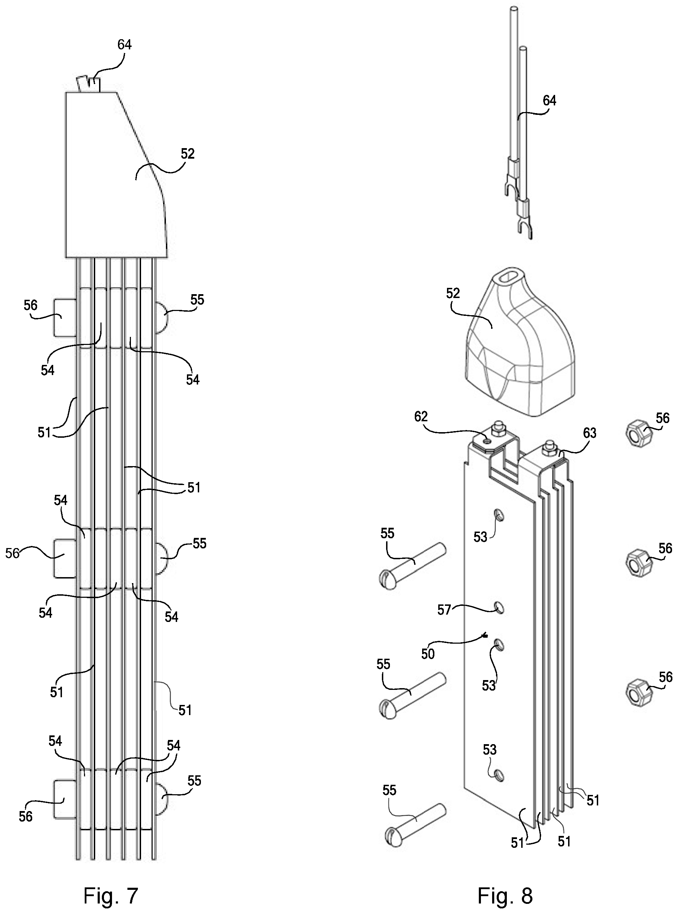

As can be seen in Figure 8, the electrodes 51 will have a positive terminal 62 and a negative terminal 63 which are connected to said power output 30 of the electronics module 5 by means of respective power supply cables 64. In order to allow the passage of the power supply cable 64, both said upper cell casing 52 and said front 42 and rear 46 chlorination module casings have respective openings 65, 66 and 67, respectively. In the case of the openings 66 and 67 of the front 42 and rear 46 chlorination module housings, they comprise a half opening that, when both parts are coupled, forms a single upper opening. The power supply cable 64 can be wound outside the internal housing of the rear casing 17 which protrudes forming a base for winding it, as best illustrated in Figure 2.

In this way, and according to figure 10, the electronic module 5 is connected to said external power supply 29, and through its voltage regulator 31 sends the necessary current and voltage to the mobile saline chlorination module 41 so that, through the electrolytic cell 50, it carries out the electrolysis process forming hypochlorous acid and thus sanitizing the water. It is understood that the phenomenon of electrolysis in saline water is widely known by any expert versed in the subject and that for these reasons no further descriptive details will be entered into regarding it.

In this way, figure 11, the user first fixes the command module 2 on a part outside the pool 68, and then immerses the mobile saline chlorination module 41 in the bottom of the pool 68. Salt is poured in an amount of between 3 and 6 grams per liter, this not being limiting for the invention. The user can then operate the equipment using a mobile application that the user can install on his or her cell phone in order to obtain real-time information on the conditions of the pool and the saline chlorination process. Through the information provided by the application, information from electronic module 5, the user can know if the amount of salt is correct, as well as if the pool is ready to be used.

Thus, through the internal algorithm of the processing unit 32, the invention sizes the specific treatment for each pool and proposes a usage profile to each user based on the data entered for each pool in the product's mobile application. This usage and operation information is recorded internally in the chlorinator and transmitted via the Internet (communication module 37) to the product's online platform hosted on the company's own server in the cloud. The client, through a unique digital user created on the platform for this purpose, can access the operation of the equipment they own and receive system notifications whenever they wish and configure it from the mobile application. Thus, the client can use the system without the need to create a digital user or access the Internet. The advanced and value-added functionalities are rendered ineffective, and the system behaves like a traditional salt chlorinator.

The invention proposes an electronic stage in order to deliver a controlled direct current to enable the electrolysis process in saline water. For this purpose, the electronics module will measure the behavior of the load (electrolytic cell 50) and based on the results obtained in real time, make decisions continuously to try to achieve a nominal current value determined by the model. Within a certain operating range, the electronic stage control mechanism can increase or decrease the effective output voltage to achieve the desired effect and regulate the delivered current. This adjustment mechanism is done using a classic feedback and automatic adjustment scheme, with precise digital control elements. The output current is measured via the output current sensor 39 sized for this purpose. This value is interpreted by the processor 34 of the assembly, which will make decisions and act on the output voltage through the MOSFET type transistors 38 arranged in a digital pulse width modulation (PWM) scheme, this not being limiting for the invention. While the sensing unit 33 and voltage regulator 31 assembly act on the energy delivered to the load (electrolytic cell 50) automatically and continuously, other processes occur that are equally important for the final result of the product and the customer experience.

As an example, but not limiting, through the electrolytic cell of the invention, various operating experiments were carried out to obtain a Chlorine production rate close to 10 g/h. With a working solution tap water is used with 5 g/l of food grade salt (conductivity 9.90 mS/cm - temperature 28.4°C). The average values obtained were:
Chlorine Production: 9.7 g/h
Current efficiency: 73% (10 amp)
Cell voltage: 3.5 V

In this way, the portable saline chlorinator of the present invention is constituted and constructed, which is easy to install thanks to the fact that the control module only needs to be fixed to a wall or external part of the pool, and the mobile saline chlorination module must be submerged in the deepest part of the pool. Then, salt is poured in recommended quantities, and the amount is adjusted according to the information provided by the chlorinator of the invention. This way, you have the exact amounts of salt you need, you avoid the use of chemicals for chlorination, and you have equipment that can be dismantled and used in any other pool without any problem.

## Claims

1. A portable saline chlorinator for the sanitization and maintenance of water contained in pools, ponds and the like, **characterized in that** it includes:
at least one removable command module provided internally with an electronics module having at least one voltage regulator and at least one processing unit; and
at least one mobile saline chlorination module submersible in a liquid medium and operatively connected to said removable command module, said mobile saline chlorination module being provided with an electrolytic cell.

2. Portable saline chlorinator according to claim 1, **characterized in that** said removable command module comprises:
a command module front housing having an internal front housing within which said electronics module is mounted, being furthermore, said internal casing housing has a pair of lower through holes, and a front housing base provided with a plurality of front housing perimeter holes and housing reinforcement ribs; and
a front housing cover of said front housing internal housing which has a plurality of front cover fixing holes which are aligned coincident with a plurality of front housing fixing holes provided in said front housing internal housing.

3. Portable saline chlorinator according to claim 1, **characterized in that** said removable command module further comprises:
a rear command module casing having an internal rear casing housing protruding beyond the thickness of said rear command module casing, said internal rear casing housing having a rear housing base provided with a plurality of rear housing perimeter holes which are aligned with said plurality of front housing perimeter holes;
a rear housing cover of said rear housing internal housing which has a plurality of rear cover fixing holes which are aligned with a plurality of rear housing fixing holes provided in said rear housing base; and
a command module fixing bracket mounted on a portion of said command module rear housing.

4. Portable salt chlorinator according to any of the preceding claims, **characterized in that** said electronics module has a power input operatively connected to an external power supply, and a power output that is operatively connected to said mobile salt chlorination module.

5. Portable saline chlorinator according to claim 1 and 4, **characterized in that** said voltage regulator of said electronics module is connected to said power input and to said power output.

6. Portable saline chlorinator according to claim 1, **characterized in that** said processing unit of the electronic module comprises a processor, a non-volatile memory, a user interface module and a communication module via Bluetooth and Wi-Fi.

7. Portable salt chlorinator according to any of the preceding claims, **characterized in that** said electronics module further comprises a detection unit comprising a set of MOSFET transistors, an output current sensor connected to said power output of the electronics module, and a polarity inverter unit connected to said power input and output of the electronics module.

8. Portable salt chlorinator according to any of the preceding claims, **characterized in that** said power inlet, power outlet, processing unit and detection unit are communicated and operatively connected to each other.

9. Portable saline chlorinator according to claim 1, **characterized in that** said mobile saline chlorination module comprises:
a chlorination module front housing which is provided with a plurality of front housing holes and a plurality of front housing side slots; and
a rear casing of a chlorination module which is provided with a plurality of rear casing holes and a plurality of rear casing side slots which are aligned with said plurality of front casing side slots.

10. Portable saline chlorinator according to any of the preceding claims, **characterized in that** said electrolytic cell of said mobile saline chlorination module is housed within said front and rear casings of the chlorination module, and comprises a plurality of resin-coated electrodes retained at the top by means of an upper cell casing.

11. Portable salt chlorinator according to any of the preceding claims, **characterized in that** said resin-coated electrodes are connected to said power output of the electronic module by means of respective power supply cables.
